Europäisches Patentamt

European Patent Office

Office européen des brevets

(19)

(11) Veröffentlichungsnummer: **0 242 541**

**A2**

# (12) EUROPÄISCHE PATENTANMELDUNG

(21) Anmeldenummer: **87102801.5**

(22) Anmeldetag: **27.02.87**

(51) Int. Cl.⁴: **H04M 1/31 , H04M 19/08**

(30) Priorität: **24.04.86 DE 3613825**

(43) Veröffentlichungstag der Anmeldung:
**28.10.87 Patentblatt 87/44**

(84) Benannte Vertragsstaaten:
**AT BE CH FR GB IT LI NL SE**

(71) Anmelder: **TELENORMA Telefonbau und Normalzeit GmbH**
**Mainzer Landstrasse 128-146**
**D-6000 Frankfurt (Main)(DE)**

(72) Erfinder: **Lange, Heinz**
**Buchenstrasse 6**
**D-6230 Frankfurt 80(DE)**
Erfinder: **Moses, Klaus**
**Talstrasse 10g**
**D-6000 Frankfurt 56(DE)**

(54) **Schaltungsanordnung für einen Fernsprechapparat mit Impulswahl.**

(57) In einem Fernsprechapparat mit einer als Querglied zwischen die Sprechadern geschalteten Speiseschaltung ist eine Speiseauskoppelung nach Prioritäten vorgesehen. Am Ausgang mit der höchsten Priorität ist die für die Erzeugung der Wahlimpulse vorgesehene Steuereinrichtung angeschlossen, die über einen Spannungsregler mit einer konstanten Spannung versorgt wird. Die Wahlinformationsaussendung in Form von Wahlimpulsen geschieht dadurch, daß der Spannungsregler zum Schließen der Schleife niederohmig und zum Öffnen der Schleife hochohmig im Rhythmus der auszusendenden Wahlimpulse auf Veranlassung der Steuereinrichtung geschaltet wird.

Fig. 1

EP 0 242 541 A2

## Schaltungsanordnung für einen Fernsprechapparat mit Impulswahl

Die Erfindung betrifft eine Schaltungsanordnung für einen Fernsprechapparat mit Impulswahl, wobei eine, mit einer Wähltastatur verbundene Steuereinrichtung zur Aussendung der Wahlimpulse ein den Schleifenstrom unterbrechendes erstes Schaltmittel und ein die Hör-und evtl. Sprechschaltung für die Dauer der Wahlimpulsaussendung dämpfendes zweites Schaltmittel steuert, und mit einer zwischen die Sprechadern geschalteten Speiseschaltung zur Aufteilung des Speisestroms für die Zusatzeinrichtungen nach Prioritätsklassen, wobei die Steuereinrichtung die höchste Prioritätsklasse hat und aus der ungeregelten Speisespannung über einen Spannungsregler mit konstanter Spannung versorgt wird.

Eine derartige Schaltungsanordnung ist bereits bekannt. So wird in der DE-PS 34 04 335 eine Schaltungsanordnung zur Leitungsspeisung von Zusatzeinrichtungen eines Fernsprechapparates beschrieben, bei welcher die Speiseschaltung als Reaktanzstufe mit Konstantgleichstromwiderstandscharakteristik ausgebildet ist.

Eine ähnliche Schaltungsanordnung ist in der DE-OS 34 29 330 beschrieben, bei welcher die Speiseschaltung durch einen Schleifenstromsensor mit nachgeschaltetem Shunt-Regler ausgebildet ist.

Bei diesen bekannten Schaltungsanordnungen weist die Speiseschaltung eine Stromverteilungsschaltung nach Prioritätsklassen auf. Die Stromverteilung erfolgt dabei derart, daß der Verbraucher mit der höchsten Priorität bei Bedarf den gesamten Schleifenstromanteil zur Stromversorgung enthält, welcher nicht für die Sprechkreisschaltung benötigt wird. Wird nun an dem Ausgang der höchsten Priorität der Stromverteilungsschaltung nicht dieser gesamte Stroman teil gezogen so steht der Rest demjenigen Verbraucher mit der nächst niedrigeren Priorität zur Verfügung.

Die Aufgabe der Erfindung besteht nun darin, eine Schaltungsanordnung zur Aussendung der Wahlimpulse bei einer derartigen Schaltungsanordnung anzugeben, welche einen möglichst geringen Aufwand erfordert.

Diese Aufgabe wird dadurch gelöst, daß der gesamte, durch die Speiseschaltung fließende Strom über den Ausgang mit der höchsten Priorität gezogen und im Rhythmus der Wahlimpulse unterbrochen wird.

Aufgrund des besonderen Verhaltens der Speiseschaltung genügt es, durch eine entsprechende Einrichtung den gesamten, durch die Speiseschaltung fließenden Strom über den Ausgang mit der höchsten Priorität zu ziehen und diesen dann im Rhythmus der Wahlimpulse zu unterbrechen.

Eine Weiterbildung der Erfindung besteht darin, daß zur Erzeugung der Wahlimpulse der als Längsregler ausgebildete Spannungsregler durch das erste Signal aus der Steuereinrichtung niederohmig geschaltet wird.

Da die Steuereinrichtung nur einen geringen Strombedarf hat, ist der Längsregler entsprechend hochohmig ausgebildet. Für die Aussendung der Wahlimpulse wird der Längsregler aufgrund eines Signals aus der Steuereinrichtung entsprechend niederohmig, wodurch der gesamte, durch die Speiseschaltung fließende Strom über den Längsregler gezogen und entsprechend der Wahlimpulse unterbrochen wird.

Eine Weiterbildung der Erfindung für einen Fernsprechapparat mit einer Speiseschaltung und einer mit dieser verbundenen Stromverteilungsschaltung besteht darin, daß durch das für die Dauer der Wahlimpulsaussendung anliegende zweite Signal die Speiseschaltung hochohmig geschaltet wird.

Die Erfindung wird anhand eines Ausführungsbeispiels näher erläutert, welches in der Zeichnung dargestellt ist. Es zeigt:

Fig. 1 das Blockschaltbild eines Fernsprechapparates,

Fig. 2 die Schaltungsanordnung eines Längsreglers,

Fig. 3 die Schaltungsanordnung einer Reaktanzstufe mit konstant Gleichstromwiderstandscharakteristik und einer Stromverteilungsschaltung und

Fig. 4 einen Schleifenstromsensor und einem mit diesem in Reihe geschalteten Shunt-Regler und einer Stromverteilungsschaltung.

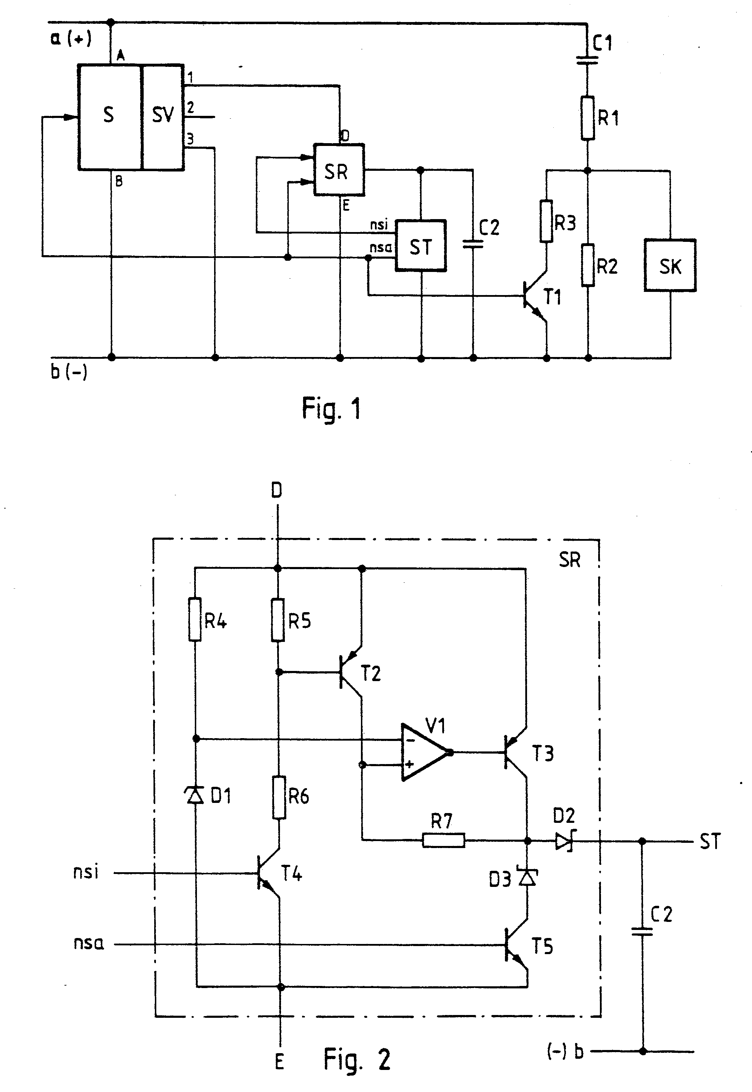

Bei dem in Fig. 1 gezeigten Blockschaltbild einer Fernsprechteilnehmerstation sind nur diejenigen Einrichtungen gezeigt, welche zum Verständnis der Erfindung unbedingt notwendig sind. Einrichtungen zur polunabhängigen Anschaltung, der Gabelumschalter usw. sind weggelassen.

Zwischen die Sprechadern a/b ist eine Speiseschaltung S geschaltet. Auf deren Aufbau wird weiter unten noch ausführlich eingegangen. Mit der Speiseschaltung S ist eine Stromverteilungsschaltung SV verbunden. welche mehrere Ausgänge (1,2,3) zum Anschluß von Verbrauchern aufweist. Bei dem vorliegenden Ausführungsbeispiel wird davon ausgegangen, daß am Ausgang (1) mit der höchsten Priorität die Steuereinrichtung ST angeschlossen ist. Am Ausgang 2 kann beispielsweise der Verstärker einer Lauthör-oder Freisprecheinrichtung angeschlossen sein. Die Stromverteilungsschaltung SV ist derart ausgebildet, daß der durch die Speiseschaltung S fließende Strom auf die Ausgänge der Stromverteilungsschaltung aufgeteilt wird, wobei am Ausgang 1 ein Speisestrom gezogen werden kann, welcher maximal dem in die Speiseschaltung S fließenden Strom entspricht. In einem derartigen Fall kann an den Ausgängen 2 und 3 kein Strom mehr gezogen werden. Wird nun am Ausgang 1 ein niedrigerer Strom gezogen, so kann der überige Strom aus dem Ausgang 2 gezogen werden, wobei wiederum der Ausgang 3 stromlos bleibt. Wird dagegen von den Ausgängen 1 und 2 kein Strom oder nur ein geringer Strom gezogen, so steht der gesamte, in die Speiseschaltung S am Eingang A hineinfließende Strom am Ausgang 3 bzw. der Rest zur Verfügung. Da die an den Ausgängen 1 bis 3 angeschlossenen Verbraucher mit der b-Ader verbunden sind, fließt immer über die Speiseschaltung S ein Strom, welcher dem Schleifenstrom entspricht.

Da die Steuereinrichtung ST eine konstante Spannung benötigt, ist zwischen den Speiseeingang derselben und den Ausgang 1 der Stromverteilungsschaltung SV ein Spannungsregler SR geschaltet. Dieser ist wegen der geringen Stromaufnahme der Steuereinrichtung ST normalerweise hochohmig.

Die Steuereinrichtung ST ist mit einer nicht gezeigten Wähltastatur zur Eingabe der Ziffern einer zu wählenden Rufnummer verbunden. Aufgrund einer eingegebenen Ziffer erzeugt die Steuereinrichtung ST an ihrem Ausgang nsi Signale zur Steuerung eines Schaltmittels, welches den Schleifenstrom im Rhythmus der Wahlimpulse unterbricht und am Ausgang nsa ein Signal, welches für die Dauer der Wahlimpulsaussendung anliegt. Durch das Signal am Ausgang nsa wird der Spannungsregler niederohmig geschaltet, so daß der gesamte in die Speiseschaltung S fließende Strom über den Ausgang 1 der Stromverteilungsschaltung SV gezogen und im Rhythmus der Wahlimpulse unterbrochen werden kann. Außerdem wird über das Signal am Ausgang nsa der Steuereinrichtung ST der Transistor T1 leitend gesteuert, so daß für die Dauer der Aussendung der Wahlimpulse der Sprechkreis SK gedämpft wird, so daß die Wahlimpulse noch schwach durch die Hörkapsel hörbar sind. Durch das Signal am Ausgang nsa wird außerdem die Speiseschaltung S hochohmig geschaltet, hierdurch wird verhindert, daß in den Pausen zwischen den Wahlimpulsen, d.h. wenn kein Strom über den Ausgang 1 der Stromverteilungsschaltung SV gezogen wird, Speisestrom an den anderen Ausgängen der Stromverteilungsschaltung SV für andere Verbraucher zur Verfügung steht, außerdem wird mit dem Signal am Ausgang nsa der Spannungsregler SR inaktiv geschaltet, damit verhindert wird daß dieser in den Pausen zwischen den Wahlimpulsen normal als Spannungsregler arbeitet und somit einen kleinen Strom zur Versorgung der Steuereinrichtung ST liefert. Der Kondensator C2 ist entsprechend bemessen, so daß die Stromversorgung der Steuereinrichtung ST während der Schleifenunterbrechung durch denselben aufrecht erhalten wird.

Der Aufbau und die Wirkungsweise des als Längsregler ausgebildeten Spannungsreglers SR wird anhand der in Fig. 2 gezeigten Schaltungsanordnung erläutert. Wie aus dem in Fig. 1 gezeigten Blockschaltbild hervor geht, ist der Eingang D des Spannungsreglers SR mit dem Ausgang 1 der Stromverteilungsschaltung SV und der Eingang E mit der b-Ader verbunden.

Im normalen Betriebszustand liegt an den Ausgängen nsi und nsa der Steuereinrichtung ST 0 Volt an. Der Operationsverstärker V1 erhält an seinem einen Eingang eine Referenzspannung, welche durch die Zenerdiode D1 bestimmt wird. Diese Spannung wird mit der am Kolektor von T3 anliegenden Spannung verglichen und der Transistor T3 derart gesteuert, daß am Kondensator C2 und damit auch am Speiseeingang der Steuereinrichtung ST eine Spannung anliegt, welche der Durchbruchsspannung der Zenerdiode D1 entspricht.

Im Wahlzustand wechselt zunächst der Ausgang nsa der Steuereinrichtung ST auf eine positive Spannung, wodurch der Transistor T5 leitend und somit der Spannungsregler SR niederohmig wird. Der Schleifenstrom fließt jetzt über den Eingang D, den leitenden Transistor T3, die Zenerdiode D3 und den Transistor T5 zur b-Ader. In diesem Zustand ist die Schleife zwischen den Adern a und b geschlossen. Am Ausgang nsi der Steuereinrichtung ST hat bisher 0 Volt angelegen, wodurch die Transistoren T4 und T2 gesperrt wurden ( in diesem Zustand ist der Transistor T3 leitend). Die Steuereinrichtung ST legt nun impulsweise an ihren Ausgang nsi eine positive Spannung an, wodurch die Transistoren T4 und T2 leitend werden und der Transistor T3 gesperrt wird. In diesem Zustand ist der Spannungsregler SR hochohmig, dies hat die Öffnung der Schleife zwischen den Adern a und b zur Folge.

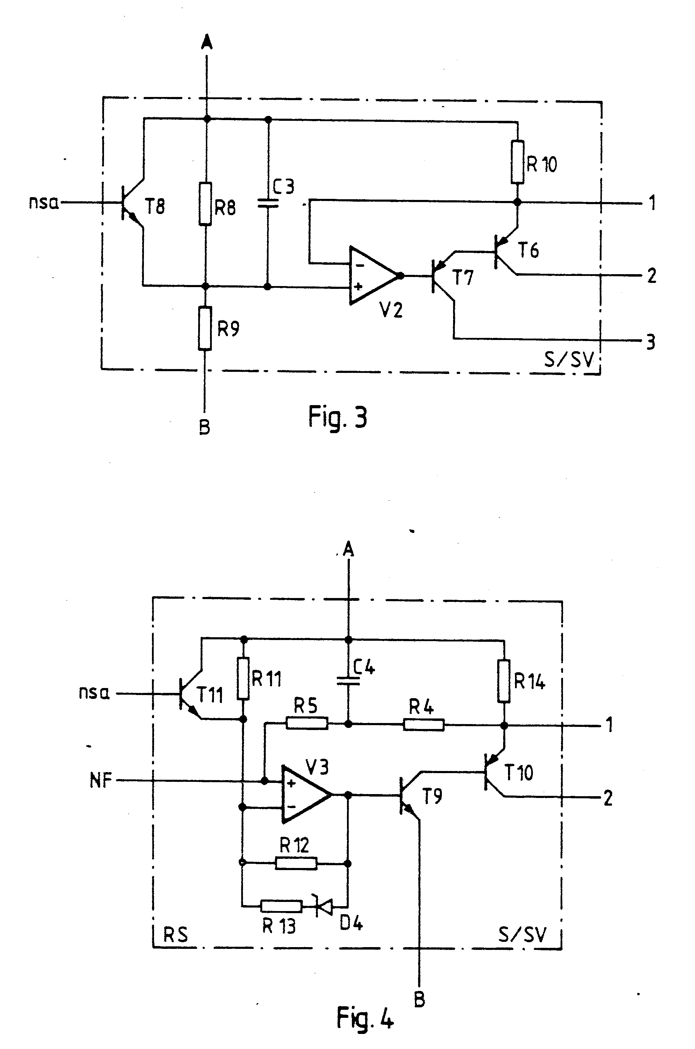

In Fig. 3 wird die Speiseschaltung in Form eines Quergliedes in Form einer Reaktanzstufe mit Konstantgleichstromwiderstandscharakteristik gezeigt, wie diese in der DE-PS 34 04 335 beschrieben ist. An der Basis des Tranistors T8 liegt im normalen Betriebszustand ebenfalls ein Signal von 0-Volt vom Ausgang nsa der Steuereinrichtung ST an. Dieses wechselt im Wahlzustand für die Dauer der Aussendung einer Wahlimpulsserie auf eine positive Spannung, wodurch der Transistor T8 leitend wird und den Widerstand R8 kurzschließt. Damit wird die Stromverteilungsschaltung SV gesperrt, so daß der Schleifenstrom nur über den Ausgang 1 derselben fließen kann. Dies ist zwar bei kurzgeschlossener Schleife ohnehin der Fall, da, wie bereits beschrieben, in diesem Zustand der Spannungsregler niederohmig ist und am Ausgang 1, d.h. mit der höchsten Priorität an der Stromverteilungsschaltung SV angeschlossen ist. Im hochohmigen Zustand des Spannungsreglers während des Wahlvorgangs würde jedoch am Ausgang 1 der Stromverteilungsschaltung SV kein Strom mehr gezogen werden, so daß der Schleifenstrom den an den übrigen Ausgängen der Stromverteilungsschaltung angeschlossenen Verbrauchern zur Verfügung stehen würde. In diesem Fall würde keine Schleifenunterbrechung erreicht werden.

In Fig. 4 ist die Schaltungsanordnung einer Speiseschaltung bestehend aus einem Querglied mit einem Schleifenstromsensor und einem mit diesem in Reihe geschalteten Shunt-Regler gezeigt. Für die Dauer der Aussendung einer Wahlimpulsserie wird der Transistor T11, welcher im Ruhezustand gesperrt ist, durch ein positives Signal am Ausgang nsa der Steuereinrichtung ST leitend, wodurch der Widerstand R11 kurzgeschlossen und die Stromverteilungsschaltung gesperrt wird. Die weiteren Vorgänge sind bereits anhand von Fig. 3 erläutert. Eine Speiseschaltung in Form eines aus einem Schleifenstromsensor mit nachgeschaltetem Shunt-Regler gebildeten Querglied ist in der DE-OS 34 29 330 beschrieben.

## Ansprüche

1. Schaltungsanordnung für einen Fernsprechapparat mit Impulswahl, wobei eine, mit einer Wähltastatur verbundene Steuereinrichtung zur Aussendung der Wahlimpulse ein den Schleifenstrom unterbrechendes erstes Schaltmittel und ein die Hör-und evtl. Sprechschaltung für die Dauer der Wahlimpulsaussendung dämpfendes zweites Schaltmittel steuert, und mit einer zwischen die Sprechadern (a/b) geschalteten Spisschaltung zur Aufteilung des Speisestroms für die Zusatzeinrichtungen nach Prioritätsklassen, wobei die Steuereinrichtung die höchste Prioritätsklasse hat und aus der ungeregelten Speisespannung über einen Spannungsregler mit konstanter Spannung versorgt wird,
dadurch gekennzeichnet,
daß der gesamte, durch die Speiseschaltung (S) fließende Strom über den Ausgang mit der höchsten Priorität gezogen und im Rhythmus der Wahlimpulse unterbrochen wird.

2. Schaltungsanordnung nach Anspruch 1,
dadurch gekennzeichnet,
daß zur Erzeugung der Wahlimpulse der als Längsregler ausgebildete Spannungsregler (SR) durch ein entsprechendes Signal (nsi) jeweils aus der Steuereinrichtung (ST) niederohmig geschaltet wird.

3. Schaltungsanordnung für einen Fernsprechapparat mit einer mit der Speiseschaltung verbundenen Stromverteilungsschaltung (SV) nach einem der Ansprüche 1 oder 2.
dadurch gekennzeichnet.
daß für die Dauer der Wahlimpulsaussendung die Stromverteilungsschaltung (SV) gesperrt wird.

4. Schaltungsanordnung nach Anspruch 2,
dadurch gekennzeichnet,
daß der Spannungsregler (SR) für die Dauer der Wahlimpulsaussendung inaktiv geschaltet wird.

Fig. 1

Fig. 2

Fig. 3

Fig. 4